# EUROPEAN PATENT SPECIFICATION

(11) **EP 0 778 728 B1**
(45) Date of publication and mention of the grant of the patent: **09.10.2002**
(21) Application number: 95927376.4
(22) Date of filing: 20.07.1995
(51) Int. Cl.: A01K 5/00, F41J 9/16, F41J 1/01

(54) **A NON-TOXIC, EDIBLE, AND BIODEGRADABLE SKEET AND METHOD OF MAKING THE SAME**
NICHTTOXISCHE, ESSBARE UND BIOABBAUBARE SCHEIBE UND VERFAHREN ZU DEREN HERSTELLUNG
DISQUE NON TOXIQUE, COMESTIBLE ET BIODEGRADABLE ET SON PROCEDE DE FABRICATION

(30) Priority: 01.08.1994 US 283539; 25.05.1995 US 449948
(43) Date of publication of application: 18.06.1997
(73) Proprietor: Hellings, Deborah, Tallahassee, FL 32315 (US)
(72) Inventor: Hellings, Deborah, Tallahassee, FL 32315 (US)
(74) Representative: Patentanwälte Westphal, Mussgnug & Partner
(86) International application number: US9509288
(87) International publication number: WO96003862

(56) References cited:
- US-A- 5 174 581
- US-A- 5 316 313
- US-A- 5 317 119

## Description

### BACKGROUND OF THE INVENTION

### 1. Field of the Invention

The present invention relates to the composition of skeet used in traps or skeet shootings and more particularly the present invention relates to a composition which is completely biodegradable, edible, as well as being non-toxic.

### 2. Description of the Prior Art

A number of attempts have been made to produce a non-toxic skeet/clay pigeon. Most of these pigeons are designed to change the composition of the toxic clay pigeon in order to reduce the toxic component of the clay pigeon.

One such device is disclosed in US Patent No. 5,316,313 issue to Moore. Moore discloses a biodegradable clay target that is fabricated from clay and includes usually less than about 1 weight percent of seeds and fertilizer. Though this target is formed from greenware product which has been dried at a low water contents to produce a device that is not environmentally toxic, Moore is silent to disclosing his device to be completely edible or as well as being valuable to the environment. Further, Moore's process utilizes materials that may be difficult to retrieve and obtain as well as provide a steps, such as sieving, that are tedious and time consuming to perform.

Another device described in the state of the art is disclosed in US Patent No. 5,317,119 issue to Ayres. Ayers discloses a biodegradable article formed of sand and decomposable binder materials. Although this article may be used as a frangible target which fractures upon impact by a projectile, Ayers does not discloses a composition which is completely edible. Instead, this biodegradable article comprises sand, lubricants like petroleum distillate or kerosene and fungicides to reduce bacterial growth. Therefore, the impact on environment is detrimental and not completely safe.

None of the previous efforts, however, provide the benefits intended with the present invention. Additionally, prior techniques do not suggest the present inventive combination of component ingredients and method of preparation as disclosed and claimed herein. The present invention achieves its intended purposes, objectives and advantages over the prior art devices through a new, useful and unobvious combination of component ingredients, which are simple to make and use, with the utilization of a minimum number of functioning ingredients, at a reasonable cost to manufacture, prepare, test and by employing only readily available ingredients.

### SUMMARY OF THE INVENTION

The present invention provides for the composition of a non-toxic edible, biodegradable skeet for skeet and trap shooting.

The elements used to fabricate the first embodiment of the non-toxic edible biodegradable skeet or the fragile flying target of the present invention comprises of flour, water, a non-toxic material. The non-toxic material may include at least one edible substance, such as birdseed, a non-toxic additive, such as salt, or a combination thereof.

The elements used to fabricate the second embodiment of the non-toxic edible biodegradable skeet or the fragile flying target of the present invention comprises of sugar, water, a non-toxic material. The non-toxic material may include at least one edible substance, such as birdseed, a non-toxic additive, such as salt, or a combination thereof.

The use of the edible substance, in both the first and second embodiments, will provide for a skeet that when shattered will be consumed by local animals while the use of the additive will provide for a skeet that is tailored to a specific need or environment. An edible and biodegradable polymer can be utilized as a filler. Additionally, food coloring or a soy ink coloring substance may be utilized for enhancing the visually of the skeet of the present invention.

The present invention is so constructed and designed to provide for the edible skeet to be generally fabricated in a saucer shape. This shape will enable the pigeon to be placed on a conventionally mechanical disk throwing apparatus, known as a trap. The unique ingredients used to formulate the present invention produces a skeet that is easily breakable by a shotgun blast as well as being strong enough to withstand the force of the mechanical disk throwing apparatus. The combination of the shape and the composition of both the first and second embodiment provides for a skeet that has an aerodynamic structure as well as being environmentally safe and non-toxic to the environment.

Accordingly, it is an object of the present invention to provide a non-toxic skeet that possess all the qualities of a clay pigeon, but will not harm the environment.

It is another object of the present invention to provide for a non-toxic skeet that is formed from edible materials to enable its consumption by a plurality of animals.

It is yet another object of the present invention to provide for a non-toxic skeet that is biodegradable, inexpensive to fabricate, durable when released from the disk throwing apparatus, and breakable once contact has been made with a bullet.

It is still yet another object of the present invention to provide for a non-toxic biodegradable skeet to which may be added various ingredients to adapt the skeet to the specific environment in which it is used.

The foregoing has outlined rather broadly the more pertinent and important features of the present invention in order that the detailed description of the invention that follows may be better understood so that the present contribution to the art can be more fully appreciated. Additional features of the invention will be described hereinafter which form the subject of the claims of the invention. It should be appreciated by those skilled in the art that the conception and the specific embodiments disclosed may be readily utilized as a basis for modifying or designing other structures for carrying out the same purposes of the present invention. It should also be realized by those skilled in the art that such equivalent structures do not depart from the scope of the invention as set forth in the appended claims.

### BRIEF DESCRIPTION OF THE PREFERRED EMBODIMENTS

Fig. 1 is a perspective view of a disc shape skeet of the first embodiment and second embodiment of the present invention.

Fig. 2 is a perspective view of a stack of skeets of the first and second embodiments of the present invention.

Fig. 3 is an environmental perspective view of the instant invention after being hit by a marksman, being eaten by local birds.

### DESCRIPTION OF THE PREFERRED EMBODIMENTS

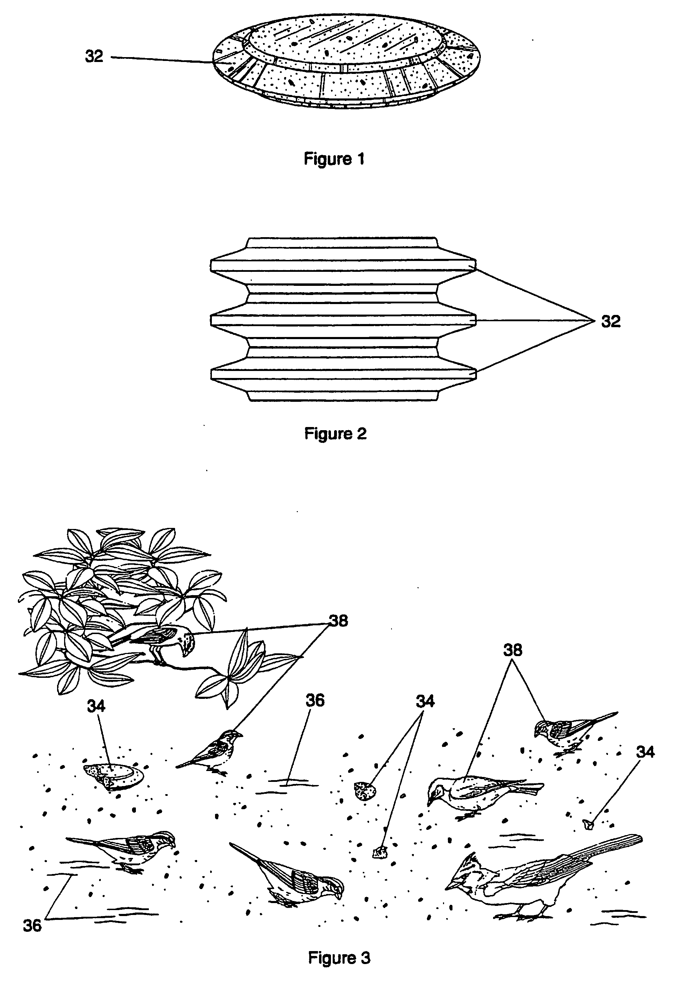

The present invention is drawn to the composition of a non-toxic, edible, biodegradable skeet that is used for trap shooting. The skeet or fragile flying target 32 of the present invention, illustrated in figures 1-3, has a saucer-like shape (see figure 1), the same as that of a conventional skeet.

The present invention uniquely combines ingredients or elements to produce a skeet that is non-toxic and biodegradable. The combination of the ingredients produces a skeet that retains its aerodynamic structure as well as being beneficial to the environment.

The elements used to fabricate the first embodiment of the non-toxic, edible, biodegradable skeet of the present invention comprises of flour, water, and a non-toxic material. This non-toxic material can be at least one non-water soluble edible substances, at least one additive, or a combination of at least one edible substance with at least one additive. An edible and biodegradable polymer can be utilized as a filler.

The first embodiment of the present invention is so constructed and designed to provide for the edible skeet to be generally fabricated in a standard skeet mold.

The first step involved in forming the non-toxic edible biodegradable skeet of the present invention is to mix the flour with the non-toxic material. This will provide for the flour to be mixed with either at least one non-water soluble edible substance (i.e. bird seed), or at least one additive (i.e. salt and fertilizer), or a combination of at least one non-water soluble edible substance and at least one additive (i.e. bird seed and salt). The mixing of the flour with either the substance(s), or additive(s), or a combination of the substance(s) and additive(s) will provide for a mixture.

Examples of non-water soluble edible substances can include, but not be limited to; bird seed (millet, milo sorghum, sun flower seed, or combination thereof), corn (whole, cracked, meal, or combination thereof), grain (wheat, barley, oats, bran, feed or combination thereof), process grain products (quick cooking grits, cream of wheat, quick cooking rice, or the like), rice (brown, white), grass (rye, hay, straw), wood (cypress mulch, pine, pine needles, cedar), a combination thereof, or the like.

These edible substances provide for the shattered skeet to be enjoyed and consumed by the local animals.

Examples of the non-toxic additive include salt, bone meal, deciduous earth, processed grits, cream of wheat, ground quick cooking rice, manure, non-toxic fertilizer, non-toxic insecticide, flake fish, oil, butter, margarine, a combination thereof, or the like.

These additives serve to adapt the biodegradable skeet to the environment in which it will be used or to improve the performance of the skeet. For instance, salt may be added to give additional strength by increasing the crystallized bonding of the ingredients, and acts as a preservative.

The non-toxic fertilizer such as bone meal, manure or the like may be added to improve soils. The insecticide that is non-toxic to animals and humans for example deciduous earth, processed grits, cream of wheat or ground quick cooking rice can be added to discourage ants.

One type of non-toxic insecticides is deciduous earth. Deciduous earth consists of ground limestone containing the sharp particles of fossilized shells, the sharp edges of the shells cut the ants or other insects to eventually kill them while not causing harm or injury to other animals.

For shooting over water, ground or flaked fish food may be added to the mixture.

The skeet of the present invention may be colored for enabling easier visibility. In order to accomplish this task, food coloring may be baked in the mixture or the cooked skeet may be painted with a non-toxic paint product.

After the flour and non-toxic material are mixed, the next step is to add water to the mixture. This addition of water will provide for the mixture to have a paste-like consistency which has a viscosity similar to cooked oatmeal.

The amount of flour in combination with the substance(s), additive(s), or combination thereof will be at least twice the volume of the amount of water that is used. Hence, the mixture, prior to the addition of water, will be at least twice the volume of the volume of water that is utilize.

After the mixing stage, the compound (flour, water, non-toxic material) is then placed in a skeet mold and the compound is the treated by heat (or cooked).

The heating or cooking process includes baking the compound at a medium to high temperature (approximately 325-400 degrees C). Baking will permit for heat to be applied at a constant rate. The heat will enable for the substance to harden. After the mixture has been cooked and hardened, it is cooled and removed from the mold. The final weight of the cooked skeet will be approximately 85 to 142 g (3.0 to 5.0 ounces). The skeet 32 may be painted with a soy ink agent to improve visibility, if food coloring was not added during baking.

In the second embodiment, the elements used to fabricate the non-toxic, edible, biodegradable skeet of the present invention comprises of sugar, water, and a non-toxic material. This non-toxic material can be at least one non-water soluble edible substance, at least one additive, or a combination of a least one edible substance with at least one additive. An edible and biodegradable polymer can be utilized as a filler.

The second embodiment is so constructed and designed to provide for the edible skeet to be generally fabricated in a standard skeet mold.

The first step involved in forming the second embodiment of the non-toxic, edible, biodegradable skeet of the present invention is to mix and heat water, sugar and a non-toxic material. This mixture is heated until the combination resembles a syrupy material. This syrupy material is poured into a skeet and left to harden.

These skeet 32, of the first and second embodiments are shaped to be stacked and transported while retaining their structural integrity (see figure 2). The combination of the ingredients and final weight enables the skeet to withstand the throwing force of the trap mechanism, while maintaining its aerodynamic structure. Additionally, the skeet 32 are also designed and constructed to shatter into fragments 34 when hit by a marksman, thus satisfying the victory condition for the sport of skeet shooting.

Once shattered, the edible pieces (such as birdseed 36) of the skeet can be consumed by the local animals 38.

While the invention has been particularly shown and described with reference to an embodiment thereof, is will be understood by those skilled in the art that various changes in form and detail may be made without departing from the scope of the invention which is set forth in the appended claims.

## Claims

1. A biodegradable edible fragile flying target comprising:
a baked or hardened mixture of material;
said baked or hardened mixture comprising flour or sugar, at least one non-toxic material, and water;
said flour and said at least one non-toxic material providing for a mixture;
said mixture being at least twice the volume of said water; and
said flying target having an aerodynamic structure and constructed to retain its integral configuration when thrown by a trap mechanism and being easily breakable by a shotgun blast.

2. A biodegradable edible fragile flying target as in Claim 1 wherein food coloring is used to color said flying target or said flying target is coated with a non-toxic paint or ink.

3. A biodegradable edible fragile flying target as in Claim 1 wherein said non-toxic material is at least one edible substance selected from the group comprising birdseed, corn, grain, processed grain, rice, grass and wood and/or at least one additive selective from the group comprising of salt, bone meal, deciduous earth, manure, non-toxic fertilizer, non-toxic insecticide, oil, butter, margarine and flake fish and/or combinations thereof.

4. A biodegradable edible fragile flying target as in Claim 1 wherein a non-toxic polymer filler is added to said mixture.

5. A biodegradable edible fragile flying target as in Claim 1 wherein said flying target has a weight of approximately 85 to 142 g (three to five ounces).

6. A method of making a biodegradable edible flying target comprising the steps of:
(a) mixing flour and at least one non-toxic material to provide for a mixture;
(b) adding water to said mixture so that said mixture is at least twice the volume of said water;
(c) placing said pastry mixture in a skeet mold;
(d) baking said pastry mixture to harden said pastry mixture; and
(e) removing said mold to produce said biodegradable flying target and said flying target having an aerodynamic structure and constructed to retain its integral configuration when thrown by a trap mechanism and is easily breakable by a shotgun blast.

7. A method of making a biodegradable edible flying target comprising the steps of:
(a) mixing and heating water, sugar and at least one non-toxic material to provide for a mixture;
(b) heating said mixture until the combination resembles a syrupy material;
(c) placing said syrupy material into a skeet mold;
(d) leaving said syrupy material to harden; and
(e) removing said mold to produce said biodegradable flying target and said flying target having an aerodynamic structure and constructed to retain its integral configuration when thrown by a trap mechanism and is easily breakable by a shotgun blast.

8. A method as in Claim 6 or 7 wherein step (b) in Claim 6 and/or step (a) in Claim 7 further includes adding food coloring to said mixture.

9. A method as in Claim 6 or 7 further comprising:
(f) painting said flying target with a non-toxic ink or paint.

10. A method as in Claim 6 or 7 wherein said non-toxic material includes at least one edible substance selected from the group comprising of birdseed, corn, grain, processed grains, rice, grass and wood and/or at least one additive selected from the group comprising of salt, bone meal, deciduous earth, manure, non-toxic fertilizer, non-toxic insecticide, oil, butter, margarine, and flake fish and/or mixtures thereof.

11. A method as in Claim 6 or 7 wherein a non-toxic polymer filler is added to said mixture.

## Patentansprüche

1. Biologisch abbaubare, essbare, zerbrechliche, fliegende Zielscheibe umfassend:
eine gebackene oder gehärtete Mischung von Material;
wobei die gebackenen oder gehärtete Mischung Mehl oder Zukker, wenigstens ein nicht-toxisches Material und Wasser aufweist;
wobei das Mehl und das wenigstens eine nicht-toxische Material eine Mischung liefern;
wobei die Mischung wenigstens das zweifache Volumen des Wassers aufweist; und
wobei die fliegende Zielscheibe eine aerodynamische Struktur aufweist und so konstruiert ist, dass sie ihre integrale Konfiguration behält, wenn sie mittels einer Schleudereinrichtung geworfen wird und dass sie durch einen Schrotflintenschuss leicht bricht.

2. Biologisch abbaubare, essbare, zerbrechliche, fliegende Zielscheibe wie in Anspruch 1, wobei Lebensmittelfarbe verwendet wird, um die fliegende Zielscheibe zu färben oder die fliegende Zielscheibe mit einer nicht-toxischen Farbe oder Tinte beschichtet ist.

3. Biologisch abbaubare, essbare, zerbrechliche, fliegende Zielscheibe wie in Anspruch 1, wobei das nicht-toxische Material wenigstens eine essbare Substanz ist, die ausgewählt ist aus der Gruppe umfassend Vogelfutter, Mais, Korn, verarbeitetes Korn, Reis, Gras und Holz und/oder wenigstens ein Zusatzstoff, der ausgewählt ist aus der Gruppe umfassend Salz, Knochenmehl, Kompost bzw. Lauberde (= decidious earth), Dung, nicht-toxische Düngemittel, nicht-toxische Insektizide, Öl, Butter, Margarine und Fischfutter bzw. zerkleinerter Fisch (= flake fish) und/oder Kombinationen davon.

4. Biologisch abbaubare, essbare, zerbrechliche, fliegende Zielscheibe wie in Anspruch 1, wobei ein nicht-toxischer Polymer-Füllstoff zu der Mischung hinzugefügt wird.

5. Biologisch abbaubare, essbare, zerbrechliche, fliegende Zielscheibe wie in Anspruch 1, wobei die fliegende Zielscheibe ein Gewicht von ca. 85 bis 142 g (drei bis fünf Unzen) aufweist.

6. Verfahren zur Herstellung einer biologisch abbaubaren, essbaren, fliegende Zielscheibe, wobei das Verfahren die Schritte umfasst:
(a) Mischen von Mehl und wenigstens einem nicht-toxischen Material, um eine Mischung bereitzustellen;
(b) Hinzufügen von Wasser zu der Mischung, so dass die Mischung wenigstens das zweifache Volumen des Wassers aufweist;
(c) Einfügen der Backmischung in eine Skeet- bzw. Tontaubenform;
(d) Backen der Backmischung, um die Backmischung zu härten; und
(e) Entfernen der Form, wodurch die biologisch abbaubare, fliegende Zielscheibe gebildet wird, und wobei die fliegende Zielscheibe eine aerodynamische Struktur aufweist und so konstruiert ist, dass sie ihre integrale Konfiguration behält, wenn sie mittels einer Schleudereinrichtung geworfen wird und dass sie durch einen Schrotflintenschuss leicht bricht.

7. Verfahren zur Herstellung einer biologisch abbaubaren, essbaren, fliegende Zielscheibe, wobei das Verfahren die Schritte umfasst:
(a) Mischen und Erhitzen von Wasser, Zucker und wenigstens einem nicht-toxischen Material, um eine Mischung bereitzustellen;
(b) Erhitzen der Mischung bis die Kombination einem sirupartigen Material gleicht;
(c) Einfügen des sirupartigen Materials in eine Skeet- bzw. Tontaubenform;
(d) Stehen lassen des sirupartigen Materials um zu härten; und
(e) Entfernen der Form, wodurch die biologisch abbaubare fliegende Zielscheibe gebildet wird, und wobei die fliegende Zielscheibe eine aerodynamische Struktur auf weist und so konstruiert ist, dass sie ihre integrale Konfiguration behält, wenn sie mittels einer Schleudereinrichtung geworfen wird und dass sie durch einen Schrotflintenschuss leicht bricht.

8. Verfahren wie in Anspruch 6 oder 7, wobei Schritt (b) in Anspruch 6 und/oder Schritt (a) in Anspruch 7 weiterhin das Hinzufügen von Lebensmittelfarbe zu der Mischung umfasst.

9. Verfahren wie in Anspruch 6 oder 7, weiterhin umfassend:
(f) Färben der fliegenden Zielscheibe mit einer nicht-toxischen Tinte oder Farbe.

10. Verfahren wie in Anspruch 6 oder 7, wobei das nicht-toxische Material wenigstens eine essbare Substanz einschließt, die ausgewählt ist aus der Gruppe umfassend Vogelfutter, Mais, Korn, verarbeitetes Korn, Reis, Gras und Holz und/oder wenigstens ein Zusatzstoff, der ausgewählt ist aus der Gruppe umfassend Salz, Knochenmehl, Kompost bzw. Lauberde (= decidious earth), Dung, nicht-toxische Düngemittel, nicht-toxische Insektizide, Öl, Butter, Margarine und Fischfutter bzw. zerkleinerter Fisch (= flake fish) und/oder Kombinationen davon.

11. Verfahren wie in Anspruch 6 oder 7, wobei ein nicht-toxischer Polymer-Füllstoff der Mischung hinzugefügt wird.

## Revendications

1. Cible volante fragile, comestible, biodégradable, comprenant :
un mélange de matériaux cuit ou durci ; ce mélange cuit ou durci comprenant de la farine ou du sucre, au moins un matériau non toxique, et de l'eau ;
cette farine et cet au moins unique matériau non toxique formant un mélange ;
ce mélange représentant au moins le double du volume de l'eau ; et
la cible volante présentant une structure aérodynamique et étant construite pour conserver sa configuration d'une seule pièce lorsqu'elle est lancée par un mécanisme de ball-trap, cette cible volante étant facile à briser par un coup de fusil.

2. Cible volante selon la revendication 1,
dans laquelle
on utilise un colorant alimentaire pour colorer la cible volante, ou on la revêt d'une peinture ou d'une encre non toxique.

3. Cible volante selon la revendication 1,
dans laquelle
le matériau non toxique est au moins une substance comestible choisie dans le groupe comprenant le millet, le maïs, le grain, le grain traité, le riz, l'herbe et le bois et/ou au moins un additif choisi dans le groupe comprenant le sel, la farine animale, la terre caduque, l'engrais, les fertilisants non toxiques, les insecticides non toxiques, l'huile, le beurre, la margarine, le poisson en flocons et/ou des combinaisons de ces produits.

4. Cible volante selon la revendication 1,
dans laquelle
un produit de remplissage en polymère non toxique est ajouté au mélange.

5. Cible volante selon la revendication 1,
dans laquelle
cette cible volante a un poids d'environ 85 à 142 grammes (trois à cinq onces).

6. Procédé de fabrication d'une cible volante, comestible, biodégradable, comprenant les étapes constituant à :
a) mélanger la farine et au moins un matériau non toxique pour obtenir un mélange ;
b) ajouter de l'eau au mélange de façon que ce mélange représente au moins le double du volume de l'eau ;
c) placer le mélange pâteux dans un moule à pigeon d'argile ;
d) faire cuire le mélange pâteux pour le faire durcir ; et
e) retirer le moule pour produire la cible volante biodégradable, cette cible volante ayant une structure aérodynamique et étant construite pour conserver sa configuration d'une seule pièce lorsqu'elle est lancée par un mécanisme de ball-trap, en étant facile à briser par un coup de fusil.

7. Procédé de fabrication d'une cible volante, comestible, biodégradable, comprenant les étapes consistant à :
a) mélanger et faire chauffer de l'eau, du sucre et au moins un matériau non toxique pour former un mélange ;
b) faire chauffer le mélange jusqu'à ce que la combinaison ressemble à un matériaux sirupeux ;
c) placer ce matériau sirupeux dans un moule à pigeon d'argile ;
d) laisser durcir le matériau sirupeux ; et
e) retirer le moule pour produire la cible volante ayant une structure aérodynamique et étant construite pour conserver sa configuration d'une seule pièce lorsqu'elle est lancée par un mécanisme le ball-trap, en étant facile à briser par un coup de fusil.

8. Procédé selon la revendication 6 ou 7,
dans lequel
l'étape (b) de la revendication 6 et/ou l'étape (a) de la revendication 7 comprend en outre l'addition d'un colorant alimentaire au mélange.

9. Procédé selon la revendication 6 ou 7,
comprenant en outre
la peinture de la cible volante par une peinture ou une encre non toxique.

10. Procédé selon la revendication 6 ou 7,
dans lequel
le matériau non toxique comprend au moins une substance comestible choisie dans le groupe comprenant le millet, le maïs, le grain, le grain traité, le riz, l'herbe et le bois et/ou au moins un additif choisi dans le groupe comprenant le sel, la farine animale, la terre caduque, l'engrais, les fertilisants non toxiques, les insecticides non toxiques, l'huile, le beurre, la margarine, le poisson en flocons et/ou des mélanges de ces produits.

11. Procédé selon la revendication 6 ou 7,
dans lequel
un produit de remplissage en polymère non toxique est ajouté au mélange.
